# EUROPÄISCHE PATENTSCHRIFT

(11) **EP 3 289 848 B1**
(45) Veröffentlichungstag und Bekanntmachung des Hinweises auf die Patenterteilung: **17.10.2018**
(21) Anmeldenummer: 17401092.6
(22) Anmeldetag: 24.08.2017
(51) Int. Cl.: A01C 7/08, A01C 7/10

(54) **PNEUMATISCHE VERTEILMASCHINE**
PNEUMATIC DISTRIBUTION MACHINE
MACHINE DE RÉPARTITION PNEUMATIQUE

(30) Priorität: 30.08.2016 DE 102016116087; 21.12.2016 DE 102016125050
(43) Veröffentlichungstag der Anmeldung: 07.03.2018
(73) Patentinhaber: Amazonen-Werke H. Dreyer GmbH & Co. KG, 49205 Hasbergen (DE)
(72) Erfinder: Hempen, Henning, 26676 Harkebrügge (DE)

(56) Entgegenhaltungen:
- EP-A1- 2 022 308
- EP-A1- 2 862 430
- DE-U1- 9 422 138
- DE-U1-202014 009 404

## Beschreibung

Die Erfindung betrifft eine pneumatische Verteilmaschine gemäß des Oberbegriffes des Patentanspruches 1.

Eine derartige pneumatische Verteilmaschine ist in der Praxis bekannt geworden. Diese pneumatische Verteilmaschine weist einen trichterförmigen Behälter mit einer unteren Auslauföffnung auf. An dieser Auslauföffnung ist ein zentrales Dosierorgan angeschlossen. Dieses Dosierorgan ist im mittleren Bereich der Maschine angeordnet und kann nicht ohne weiteres von einer seitlich neben der Maschine stehenden Bedienperson erreicht werden. Um für einen Abdrehvorgang einen Auffangbehälter unterhalb des Dosierorgans bzw. der Durchleitungsöffnung platzieren zu können, ist an dem Rahmen der Maschine eine Schiebeführung, die von einer gut von der Außenseite erreichbaren Bereich bis in die Nähe der Durchleitungsöffnung reicht, angeordnet, um über diese Schiebeführung den Auffangbehälter unterhalb des Dosierorgans bzw. der Durchleitungsöffnung platzieren zu können. Die Durchleitungsöffnung lässt sich durch eine verschwenkbare Abdeckklappe abdecken. Das Verschwenken der Abdeckklappe erfolgt hier durch die Bedienperson von Hand, indem die Bedienperson seitlich neben der Maschine stehend sich zur Mitte der Maschine hin beugen oder die Maschine betreten muss. Dieses ist sehr unbequem. Weiterhin lässt sich der Auffangbehälter mittels eines Seiles nach der Durchführung des Abdrehvorgang zur Seite hin herausziehen, ohne dass die Abdeckklappe in eine die Durchleitungsöffnung verschließende Position verschwenkt werden muss. Hierdurch kommt es zu Fehlbedienungen und Fehldosierungen des Materials während der Ausbringung der Saatgutes, wenn die Abdeckklappe nicht in einem separaten Arbeitsgang direkt von Hand in ihre die Durchleitungsöffnung verschließende Position verbraucht worden ist.

Einige gattungsgemäße Verteilmaschinen sind aus EP 2 022 308 A1, DE 94 22 138 U1, DE 20 2014 009404 U1 und EP 2 862 430 A1 bekannt.

Der Erfindung liegt die Aufgabe zu Grunde, auf einfache Weise sicherzustellen, dass nach Beendigung des Abdrehvorganges die Abdeckklappe in die die Durchleitungsöffnung verschließende Position zwangsweise verschwenkt werden muss.

Diese Aufgabe der erfindungsgemäß dadurch gelöst, dass der Abdeckklappe eine ein Bedienungsmittel aufweisende Fernbedienungsvorrichtung zum wahlweisen Verschwenken der Abdeckklappe in die jeweilige Abdeckposition und/oder Abdrehposition zugeordnet ist.

Infolge dieser Maßnahmen kann einerseits die Abdeckklappe bequem von einer seitlich neben der Verteilmaschine stehenden Bedienperson über die Fernbedienung in bequemer Weise in die jeweils gewünschte Stellung gebracht werden und andererseits kann der Auffangbehälter nur dann aus seiner Auffangposition unterhalb des Dosierorgans bzw. der Durchleitungsöffnung nach außen gezogen werden, wenn vorher über die Fernbedienung die Abdeckklappe in die die Durchleitungsöffnung verschließende Position verschwenkt worden ist. Hierdurch wird zwangsweise sichergestellt, dass die Abdeckklappe in jedem Falle für das Ausbringen des Saatgutes in ihre die Durchleitungsöffnung verschließende Position sich befindet. Dieses lässt sich dadurch erreichen, dass der Abstand zwischen dem oberen Bereich des Auffangbehälters und dem unteren äußeren Bereich des Injektors im Bereich der Durchleitungsöffnung kleiner als die Länge der für die Durchführung des Abdrehvorgang aufgeschwenkte Abdeckklappe ist.

Um in jedem Falle in vorteilhafterweise sicherzustellen, dass der Auffangbehälter nur bei sich die Durchleitungsöffnung verschließender Position befindliche Abdeckklappe unter der Durchleitungsöffnung hinweg nach außen gezogen werden kann, ist vorgesehen, dass der untere Bereich der in Abdrehposition aufgeschwenkten Abdeckklappe tiefer als der obere in Herauszugrichtung gesehene hintere obere Bereich des sich in Abdrehposition befindlichen Auffangbehälters liegt.

Damit die Fernbedienungsvorrichtung in einfacher und bequemer Weise von einer seitlich neben der Verteilmaschine stehenden Person bedient werden kann, ist vorgesehen, dass das Bedienungsmittel der Fernbedienungsvorrichtung im äußeren Bereich und/oder an der Außenseite Verteilmaschine angeordnet ist.

Eine vorteilhafte und einfache Ausgestaltung einer Fernbedienungsvorrichtung lässt sich dadurch schaffen, dass die Fernbedienungsvorrichtung als Seil-, Bowdenzug und/oder mechanisches Gestänge ausgebildet ist.

In einer anderen Ausgestaltung ist vorgesehen, dass die Fernbedienungsvorrichtung als motorisches Stellelement ausgebildet ist.

In bevorzugter Weise verläuft die Schwenkachse der Abdeckklappe in Bewegungsrichtung des Auffangbehälters.

Bei entsprechender Ausgestaltung kann die Schwenkachse der Abdeckklappe quer zur Bewegungsrichtung des Auffangbehälters verlaufen.

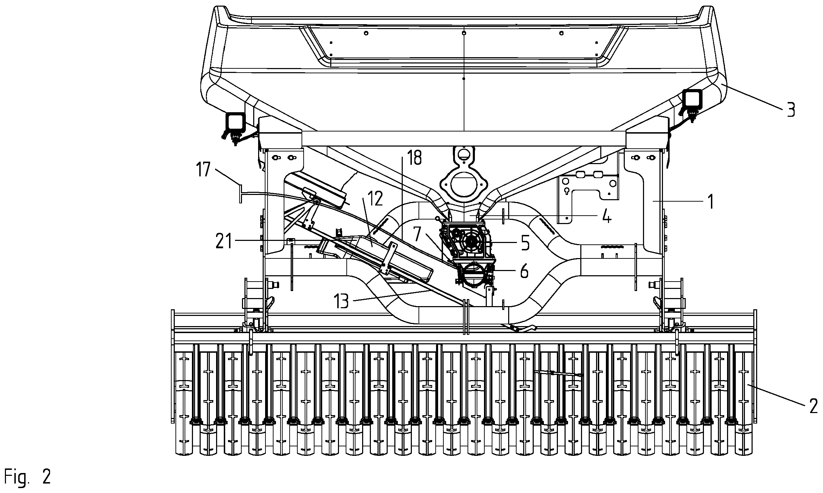

Weitere Einzelheiten der Erfindung sind der Beispielsbeschreibung und den Zeichnungen zu entnehmen. Die Zeichnungen zeigen
- Fig.1: eine auf der Bodenbearbeitungsmaschine aufgebaute pneumatische Verteilmaschine in der Ansicht von hinten, in Prinzip- und Teildarstellung, wobei der Auffangbehälter sich in Parkposition befindet,
- Fig.2: die pneumatische Verteilmaschine nach der Darstellungsweise gemäß Fig.2, wobei der Auffangbehälter sich in Abwärtsposition in Richtung Auffang- und Abdrehposition befindet,

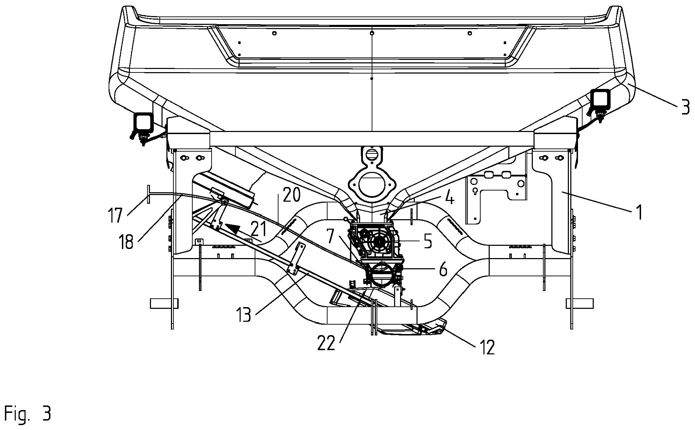

- Fig.3: die pneumatische Verteilmaschine nach der Darstellungsweise gemäß Fig.2 in Teildarstellung und vergrößertem Maßstab, wobei der Auffangbehälter sich in Abdrehposition befindet,

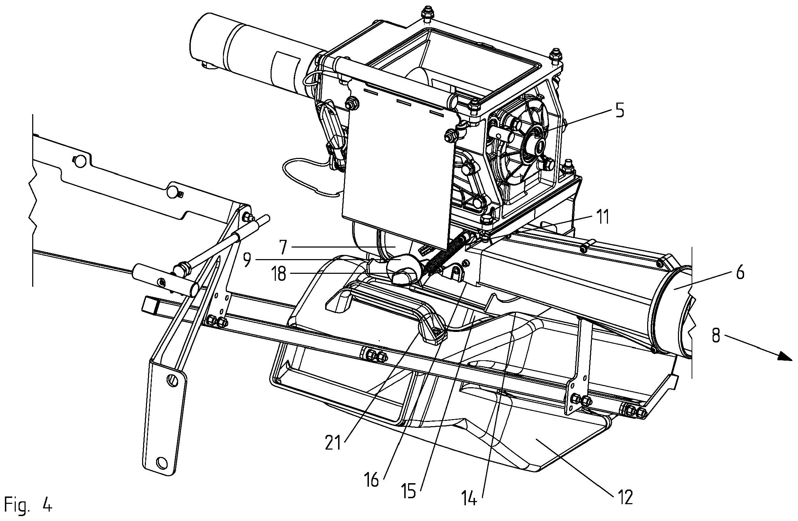

- Fig.4: die Anordnung des Auffangbehälter unterhalb der Durchleitungsöffnung in der Injektorschleuse und der unterhalb des Vorratsbehälters der Verteilmaschine angeordneten Dosiereinrichtung mit die Durchleitungsöffnung verschließende Abdeckklappe im vergrößertem Maßstab und in perspektivischer Ansicht von seitlich-oben und schräg hinten,

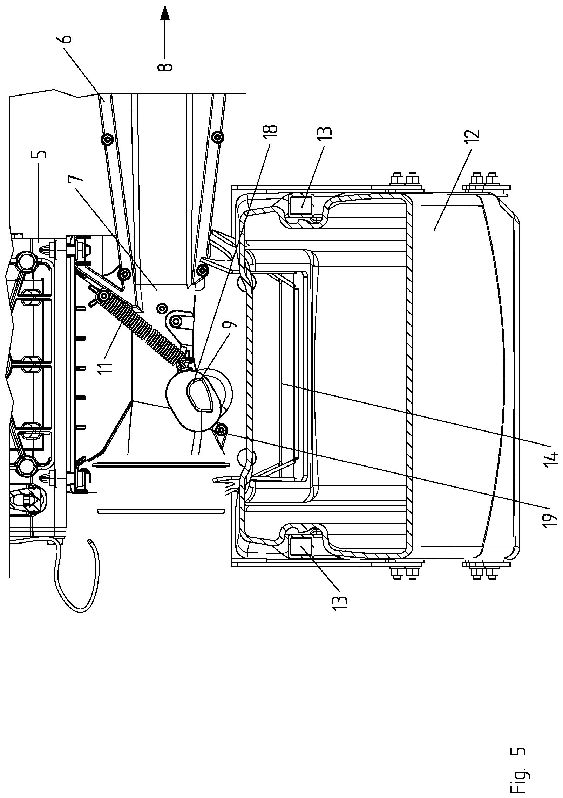

- Fig.5: die Anordnung des Auffangbehälter unterhalb der Durchleitungsöffnung in der Injektorschleuse und der unterhalb des Vorratsbehälters der Verteilmaschine angeordneten Dosiereinrichtung mit die Durchleitungsöffnung verschließende Abdeckklappe nach Fig.4 im vergrößertem Maßstab und in der Seitenansicht von links,

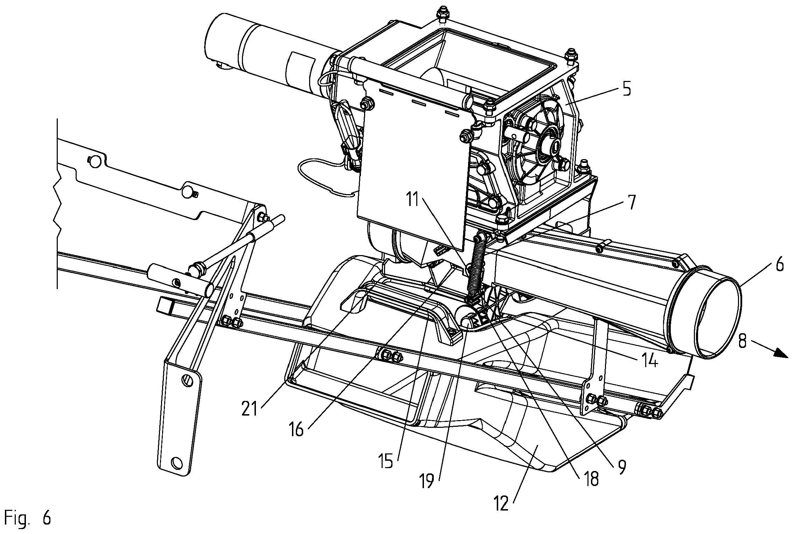

- Fig.6: die Anordnung des Auffangbehälter unterhalb der Durchleitungsöffnung in der Injektorschleuse und der unterhalb des Vorratsbehälters der Verteilmaschine angeordneten Dosiereinrichtung mit die Durchleitungsöffnung freigebende Abdeckklappe im vergrößertem Maßstab und in perspektivischer Ansicht von seitlich-oben und schräg hinten und

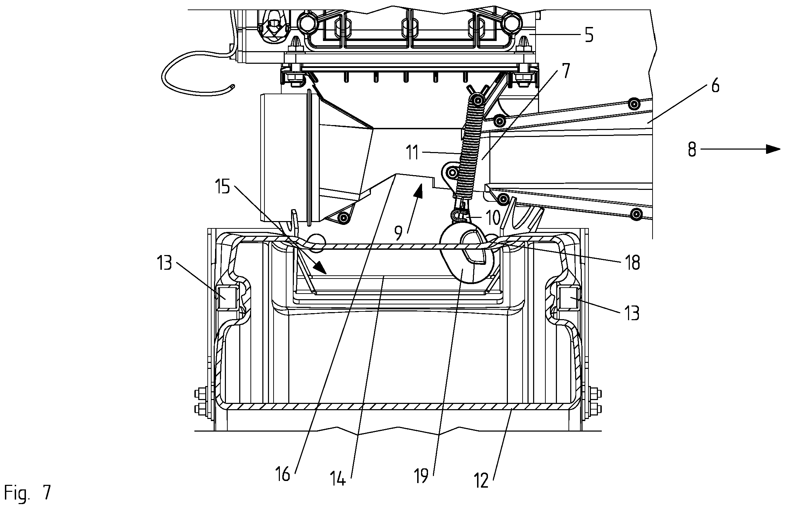

- Fig.7: die Anordnung des Auffangbehälter unterhalb der Durchleitungsöffnung in der Injektorschleuse und der unterhalb des Vorratsbehälters der Verteilmaschine angeordneten Dosiereinrichtung mit die Durchleitungsöffnung freigebende Abdeckklappe nach Fig.6 im vergrößertem Maßstab und in der Seitenansicht von links.

Die pneumatische Verteilmaschine weist einen Rahmen 1 auf, über den sie im Ausführungsbeispiel auf die Bodenwalze 2 einer nicht dargestellten Bodenbearbeitungsmaschine aufgebaut ist. An dem Rahmen 1 ist der trichterförmige Vorratsbehälter 3 befestigt. An seinem unteren Ende 4 weist der trichterförmige Vorratsbehälter 3 eine Auslauföffnung auf, die mit der an dem unteren Ende 4 des Vorratsbehälters 3 angeordneten Dosiereinrichtung 5 in Verbindung steht. Unterhalb der Dosiereinrichtung 5 ist die in der von einem nicht dargestellten Gebläse pneumatisch beaufschlagten Förderleitung 6 angeordnete Injektorschleuse 7 angeordnet. Die Förderleitung 6 weist in Förderrichtung 8 einen nicht dargestellten Verteilerkopf auf, von dem aus Verteilerleitungen zu beispielsweise als Säscharen ausgebildeten Ausbringelementen führen.

Die Injektorschleuse 7 weist in ihrer oberen Wand im Bereich der Dosiereinrichtung 5 eine Einspeiseöffnung, die mit der Dosiereinrichtung 5 in Verbindung steht, auf. Weiterhin weist die Injektorschleuse 7 in ihrer unteren Wand, der Einspeiseöffnung gegenüberliegend, eine Durchleitungsöffnung 9 auf. Der Durchleitungsöffnung 9 ist eine um eine horizontale Achse verschwenkbar angeordnete Abdeckklappe 10 zugeordnet, wobei diese Schwenkachse in Bewegungsrichtung des Auffangbehälters verläuft, wie den Zeichnungen zu entnehmen ist Diese Abdeckklappe 10 lässt sich in eine Ausbringposition verschwenken, in welcher sie, wie in den Fig.4 und 5 dargestellt, die Durchleitungsöffnung 9 verschließt und andererseits in Abdehposition, wie in den Fig.6 und 7 dargestellt, die Durchleitungsöffnung 9 für den Abdreh- und Entleerungsvorgang freigibt. Zwischen der Abdeckklappe 10 und der Injektorschleuse 7 ist eine Zugfeder 11 angeordnet, so dass sie in Art einer Totpunktschaltung in einfacher Weise definiert in die jeweilige Position zu verbringen ist und in dieser verbleibt.

Unterhalb der Durchleitungsöffnung 9 ist zur Durchführung des Abdrehvorganges und zum Auffangen des beim Abdrehvorgang dosierten Materials ein Auffangbehälter 12 zu positionieren. Um den Auffangbehälter 12 in einfacher Weise durch eine seitlich der Verteilmaschine und/oder des Bodenbearbeitungsgerätes stehende Person unter der in der Mitte der Maschine sich befindlichen Durchleitungsöffnung 9 oder des Zentraldosierorgans 5 positionieren zu können, ist an dem Rahmen 2 eine Schiebeführung 13 angeordnet. Diese Schiebeführung 13 ist unter Schräglage am Rahmen 1 befestigt. Hierbei kann die Schräglage so gewählt sein, dass die schräge Anordnung der Schiebeführung 13 ausreichend ist, dass unter Überwindung der zwischen der Schiebeführung 13 und dem Auffangbehälter 12 auftretenden Gleitreibung, der Auffangbehälter 12 selbsttätig in seine Position unterhalb der Durchleitungsöffnung 9 über die Schiebeführung 13 rutscht.

Der Abstand zwischen dem oberen Bereich 14 des Auffangbehälters 12 im Bereich seiner Auffangöffnung 15 und dem unteren äußeren Bereich 16 der Injektorschleuse 7 im Bereich der Durchleitungsöffnung 9 ist kleiner als die Länge der für die Durchführung des Abdrehvorganges aufgeschwenkten Abdeckklappe 10, wie Fig. 6 und 7 zeigen. An der Abdeckklappe ist eine ein Bedienungsmittel 17 aufweisende Fernbedienungsvorrichtung 18 zum wahlweisen Verschwenken der Abdeckklappe 10 in die jeweilige Abdeckposition (Fig. 4 und 5) und/oder Abdrehposition (Fig. 6 und 7) angeordnet. Das Bedienungsmittel 17 der Fernbedienungsvorrichtung 18 ist im äußeren Bereich und/oder an der Außenseite der Maschine angeordnet. Von hier aus kann das Bedienungsmittel 17 bequem von dem seitlich neben der Verteilmaschine stehenden Bediener erreicht und bedient werden, umso über die Fernbedienungsvorrichtung 18 die Abdeckklappe 10 in die jeweils gewünschte Position zu verschwenken. Die Ferbedienungsvorrichtung 18 ist im Ausführungsbeispiel als Bowdenzug ausgebildet.

Weil der Abstand zwischen dem oberen Bereich 14 des Auffangbehälters 12 im Bereich seiner Auffangöffnung 15 und dem unteren äußeren Bereich 16 der Injektorschleuse 7 im Bereich der Durchleitungsöffnung 9 kleiner als die Länge der für die Durchführung des Abdrehvorganges aufgeschwenkten Abdeckklappe 10 ist, liegt der untere Bereich 19 der in Abdrehposition aufgeschwenkten Abdeckklappe 10 tiefer als der obere in Herauszugrichtung 20 gesehene hintere obere Bereich 14 des sich in Abdrehposition befindlichen Auffangbehälters 12. Somit wird verhindert, dass der Auffangbehälter 12 bei sich nicht in die Durchleitungsöffnung 9 verschließende Position befindlichen Abdeckklappe 10 und der der Durchleitungsöffnung 9 in Richtung 20 der Maschinenaußenseite gezogen werden kann. An dem Auffangbehälter 12 ist ein Seil 21 oder eine sonstige Vorrichtung zum Ziehen des Auffangbehälters 12 in Richtung 20 der Maschinenaußenseite angeordnet.

Die Fernbedienungsvorrichtung 18 zum Betätigen, also dem Verschwenken der Abdeckklappe 10 kann als Seil-, Bowdenzug und/oder mechanisches Gestänge ausgebildet sein. Auch ist es möglich diese Fernbedienungsvorrichtung als motorisches Stellelement auszubilden.

Der Abdrehvorgang wird folgendermaßen durchgeführt:
Um den Abdrehvorgang durchzuführen, wird zunächst der Auffangbehälter 12 aus der in Fig.1 dargestellten Transportposition in Richtung der Maschinenaußenseite aus der Schiebeführung 7 herausgezogen und umgedreht in die Schiebeführung 13 wieder eingesetzt und entsprechend den Fig. 2 und 3 in die Abdrehposition gemäß Fig. 3 gebracht. Anschließend wird über die Bedienungsvorrichtung 17 der Fernbedienungsvorrichtung 18 die Abdeckklappe 10 aus der in den Fig.4 und 5 dargestellten die Durchleitungsöffnung 9 verschließende Position in die in den Fig. 7 und 8 dargestellte, die Durchleitungsöffnung 9 freigebende Position verschwenkt. Bei abgeschaltetem Gebläse, d.h., es ist kein Förderluftstrom vorhanden der durch die Injektorschleuse 7 strömt, wird der Abdrehvorgang gestartet, d.h., über die Dosiervorrichtung 5 wird Material für den Abdrehvorgang dosiert und gelangt durch Passieren der Injektorschleuse 7 über die Auffangöffnung 15 in den Auffangbehälter 12. Nach Beendigung des Dosiervorganges für den Abdrehvorgang muss zunächst über die Bedienungseinrichtung 17 der Fernbedienungsvorrichtung 18 die Abdeckklappe 10 aus der in den Fig. 7 und 8 dargestellten die Durchleitungsöffnung 9 freigebende Position in die in den Fig. 4 und 5 dargestelten die Durchleitungsöffnung 9 verschließende Position verschwenkt werden, damit überhaupt der Auffangbehälter 12 über das Seil 21 in Richtung der Maschinenaußenseite gezogen werden kann, damit der Auffangbehälter aus der Schiebeführung 13 zum Auswiegen der in dem Auffangbehälter 12 während der Abdrehprobe aufgefangenen Materialmenge herausgenommen werden kann. Aufgrund der Ausgestaltung und Zuordnung der Abdeckklappe 10 und des Auffangbehälter 12 zueinander kann der Auffangbehälter 12 nur dann von seiner Position unterhalb der Durchleitungsöffnung 9 herausgezogen werden, wenn die Abdeckklappe 10 sich in der in den Fig. 4 und 5 dargestellten Position befindet.

## Patentansprüche

1. Pneumatische Verteilmaschine mit einem Rahmen (1), trichterförmigem Vorratsbehälter (3), einer am unteren Ende (4) des trichterförmigen Vorratsbehälters (3) angeordneten Dosiereinrichtung (5), pneumatisch beaufschlagter und zu einem Verteilerkopf führender Förderleitung (6) mit einem zumindest eine Einspeiseöffnung aufweisenden Injektor (7), wobei über die Einspeiseöffnung des Injektors (7) das sich im Vorratsbehälter (3) befindliche auszubringende Material von der Dosiereinrichtung (5) in die Förderleitung (6) eingespeist wird, wobei der Injektor (7) in seiner der Einspeiseöffnung gegenüber liegenden Wand eine von einem als um eine horizontale Achse verschwenkbar angeordnete Abdeckklappe (10) abdeckbare Durchleitungsöffnung (9) für das beim Abdrehvorgang dosierte Material aufweist, wobei zur Durchführung (3) des Abdrehvorgang und zum Auffangen des beim Abdrehvorgang dosierten Materials unterhalb der Durchleitungsöffnung ein Auffangbehälter (12) anzuordnen ist, wobei der Auffangbehälter (12) über eine am Rahmen (1) angeordnete Schiebeführung (13) zur Durchführung des Abdrehvorganges unterhalb Durchleitungsöffnung (9) zu positionieren ist, **dadurch gekennzeichnet, dass** der Abdeckklappe (10) eine ein Bedienungsmittel (17) aufweisende Fernbedienungsvorrichtung (18) zum wahlweisen Verschwenken der Abdeckklappe (10) in die jeweilige Abdeckposition und/oder Abdrehposition zugeordnet ist.

2. Verteilmaschine nach Anspruch 1, **dadurch gekennzeichnet, dass** der Abstand zwischen dem oberen Bereich des Auffangbehälters (12) und dem unteren äußeren Bereich des Injektors (7) im Bereich der Durchleitungsöffnung (9) kleiner als die Länge der für die Durchführung des Abdrehvorgang aufgeschwenkte Abdeckklappe (10) ist.

3. Verteilmaschine nach zumindest einem der vorstehenden Ansprüche, **dadurch gekennzeichnet, dass** der untere Bereich der in Abdrehposition aufgeschwenkten Abdeckklappe (10) tiefer als der obere in Herauszugrichtung gesehene hintere obere Bereich des sich in Abdrehposition befindlichen Auffangbehälters (12) liegt.

4. Verteilmaschine nach Anspruch 1, **dadurch gekennzeichnet, dass** das Bedienungsmittel (17) der Fernbedienungsvorrichtung (18) im äußeren Bereich und/oder an der Außenseite Verteilmaschine angeordnet ist.

5. Verteilmaschine nach zumindest einem der vorstehenden Ansprüche, **dadurch gekennzeichnet, dass** die Fernbedienungsvorrichtung (18) als Seil-, Bowdenzug und/oder mechanisches Gestänge ausgebildet ist.

6. Verteilmaschine nach zumindest einem der vorstehenden Ansprüche, **dadurch gekennzeichnet, dass** die Fernbedienungsvorrichtung (18) als motorisches Stellelement ausgebildet ist.

7. Verteilmaschine nach zumindest einem der vorstehenden Ansprüche, **dadurch gekennzeichnet, dass** die Schwenkachse der Abdeckklappe in Bewegungsrichtung des Auffangbehälter verläuft.

8. Verteilmaschine nach zumindest einem der vorstehenden Ansprüche 1 bis 6, **dadurch gekennzeichnet, dass** die Schwenkachse der Abdeckklappe quer zur Bewegungsrichtung des Auffangbehälter verläuft.

## Claims

1. Pneumatic distribution machine having a frame (1), a hopper-like storage container (3), a metering device (5) arranged at the bottom end (4) of the hopper-like storage container (3), and a feed line (6) that is acted upon pneumatically, leads to a distribution head and has an injector (7) having at least one infeed opening, wherein the material to be dispensed that is located in the storage container (3) is fed into the feed line (6) by the metering device (5) via the infeed opening of the injector (7), wherein the injector (7) has, in its wall located opposite the infeed opening, a feed-through opening (9) for the material metered during the calibration process, said feed-through opening (9) being able to be covered by a cover flap (10) arranged so as to be pivotable about a horizontal axis, wherein, in order to carry out (3) the calibration process and to collect the material metered during the calibration process, a collection vessel (12) is intended to be arranged beneath the feed-through opening, wherein the collection vessel (12) is intended to be positioned beneath the feed-through opening (9) via a slide guide (13) arranged on the frame (1), in order to carry out the calibration process, **characterized in that** the cover flap (10) is assigned a remote-control apparatus (18), having an operating means (17), for selectively pivoting the cover flap (10) into the respective covering position and/or calibration position.

2. Distribution machine according to Claim 1, **characterized in that** the spacing between the upper region of the collection vessel (12) and the lower outer region of the injector (7) in the region of the feed-through opening (9) is less than the length of the cover flap (10) pivoted open for carrying out the calibration process.

3. Distribution machine according to at least one of the preceding claims, **characterized in that** the lower region of the cover flap (10) pivoted open in the calibration position is lower than the upper rear, as seen in the extraction direction, upper region of the collection vessel (12) located in the calibration position.

4. Distribution machine according to Claim 1, **characterized in that** the operating means (17) of the remote-control apparatus (18) is arranged in the outer region and/or on the outer side distribution machine.

5. Distribution machine according to at least one of the preceding claims, **characterized in that** the remote-control apparatus (18) is in the form of a cable pull, Bowden cable and/or mechanical linkage.

6. Distribution machine according to at least one of the preceding claims, **characterized in that** the remote-control apparatus (18) is in the form of a motorized actuating element.

7. Distribution machine according to at least one of the preceding claims, **characterized in that** the pivot axis of the cover flap extends in the direction of movement of the collection vessel.

8. Distribution machine according to at least one of the preceding Claims 1 to 6, **characterized in that** the pivot axis of the cover flap extends transversely to the direction of movement of the collection vessel.

## Revendications

1. Machine de répartition pneumatique comprenant un châssis (1), un réservoir en forme d'entonnoir (3), un dispositif de dosage (5) disposé à l'extrémité inférieure (4) du réservoir en forme d'entonnoir (3), une conduite de transport (6) sollicitée pneumatiquement et conduisant à une tête de répartition, comprenant un injecteur (7) présentant au moins une ouverture d'injection, le matériau à épandre stocké dans le réservoir (3) étant injecté par le biais de l'ouverture d'injection de l'injecteur (7) depuis le dispositif de dosage (5) dans la conduite de transport (6), l'injecteur (7) présentant dans sa paroi opposée à l'ouverture d'injection une ouverture de passage (9) pour la matière dosée lors de l'opération de contrôle de débit, pouvant être recouverte par un volet de recouvrement (10) disposé de manière à pouvoir pivoter autour d'un axe horizontal, un réservoir de collecte (12) devant être disposé en dessous de l'ouverture de passage afin d'effectuer (3) l'opération de contrôle de débit et de recueillir la matière dosée lors de l'opération de contrôle de débit, le réservoir de collecte (12) devant être positionné en dessous de l'ouverture de passage (9) par le biais d'un guide à coulisse (13) disposé sur le châssis (1) afin d'effectuer l'opération de contrôle de débit, **caractérisée en ce que** le volet de recouvrement (10) est associé à un dispositif de commande à distance (18) présentant un moyen de commande (17), pour faire pivoter de manière sélective le volet de recouvrement (10) dans la position respective de recouvrement et/ou de contrôle de débit.

2. Machine de répartition selon la revendication 1, **caractérisée en ce que** la distance entre la région supérieure du réservoir de collecte (12) et la région extérieure inférieure de l'injecteur (7) dans la région de l'ouverture de passage (9) est inférieure à la longueur du volet de recouvrement (10) ouvert par pivotement pour effectuer l'opération de contrôle de débit.

3. Machine de répartition selon au moins l'une quelconque des revendications précédentes, **caractérisée en ce que** la région inférieure du volet de recouvrement (10) ouverte par pivotement dans la position de contrôle de débit est plus basse que la région supérieure arrière, vue dans la direction d'extraction, supérieure du réservoir de collecte (12) se trouvant dans la position de contrôle de débit.

4. Machine de répartition selon la revendication 1, **caractérisée en ce que** le moyen de commande (17) du dispositif de commande à distance (18) est disposé dans la région extérieure et/ou au niveau du côté extérieur machine de répartition.

5. Machine de répartition selon au moins l'une quelconque des revendications précédentes, **caractérisée en ce que** le dispositif de commande à distance (18) est réalisé sous forme de câble de traction, de câble Bowden et/ou d'une tringlerie mécanique.

6. Machine de répartition selon au moins l'une quelconque des revendications précédentes, **caractérisée en ce que** le dispositif de commande à distance (18) est réalisé sous la forme d'un élément de réglage à moteur.

7. Machine de répartition selon au moins l'une quelconque des revendications précédentes, **caractérisée en ce que** l'axe de pivotement du volet de recouvrement s'étend dans la direction de déplacement du réservoir de collecte.

8. Machine de répartition selon au moins l'une quelconque des revendications précédentes 1 à 6, **caractérisée en ce que** l'axe de pivotement du volet de recouvrement s'étend transversalement à la direction de déplacement du réservoir de collecte.
